# FASCICULE DE BREVET EUROPEEN

(11) **EP 3 237 336 B1**
(45) Date de publication et mention de la délivrance du brevet: **02.02.2022**
(21) Numéro de dépôt: 15817869.9
(22) Date de dépôt: 23.12.2015
(51) Int. Cl.: C02F 1/24

(54) **BUSE OPTIMISÉE D'INJECTION D'EAU PRESSURISÉE CONTENANT UN GAZ DISSOUS**
INJEKTIONSDÜSE FÜR UNTER DRUCK STEHENDEM WASSER MIT GELÖSTEM GAS
INJECTION NOZZLE FOR PRESSURISED WATER CONTAINING DISSOLVED GAS

(30) Priorité: 24.12.2014 FR 1463342
(43) Date de publication de la demande: 01.11.2017
(73) Titulaire: Veolia Water Solutions & Technologies Support, 94417 Saint-Maurice Cedex (FR)
(72) Inventeur: THOUVENOT, Thomas, 78600 Maisons Laffitte (FR); VIGNERON-LAROSA, Nathalie, 93100 Montreuil (FR); ROUX, Nicolas, 92250 La Garenne Colombes (FR)
(74) Mandataire: Vidon Brevets & Stratégie
(86) Numéro de dépôt international: PCT/EP2015/081221
(87) Numéro de publication internationale: WO 2016/102701

(56) Documents cités:
- EP-A1- 2 308 601
- WO-A1-2014/192896
- DE-A1- 3 733 583
- FR-A1- 2 860 735
- DATABASE WPI Week 201242 Thomson Scientific, London, GB; AN 2012-G48714 XP002750562, -& CN 202 224 253 U (ZHUHAI JUTAL OFFSHORE OIL SERVICES CO) 23 mai 2012 (2012-05-23)

## Description

### 1. Domaine de l'invention

Le domaine de l'invention est celui des procédés et dispositifs de traitement d'effluents liquides par flottation.

### 2. Art antérieur

De nombreux procédés de traitement d'effluents liquides comprennent une étape de flottation, qui suit généralement des étapes de coagulation et de floculation.

La flottation est une technique qui vise à séparer des particules se trouvant en suspension dans un effluent liquide.

Pour cela, de l'eau pressurisée contenant un gaz dissous comme de l'air est injectée via des buses 1 à la base de la zone de flottation 2 d'un réacteur de flottation à l'intérieur de laquelle l'effluent à traiter est acheminé via une canalisation d'amenée 3. Sous l'effet de la détente du gaz dissous dans cette eau, des microbulles de gaz se forment dans l'effluent à traiter. Ces microbulles, en remontant à la surface de l'effluent à traiter, s'accrochent aux particules en suspension, qui se présentent essentiellement sous la forme de flocs, et les entrainent avec elles. Ces particules sur lesquelles des microbulles sont attachées sont alors appelées agglomérats flocs-bulles. Le mélange d'effluent et d'agglomérats passe de la zone de flottation 2 à la zone de séparation 4 du réacteur qui sont séparées l'une de l'autre par une paroi verticale 7. Les particules en suspension sont ainsi séparées dans la zone de séparation 4. L'effluent traité est évacué en partie inférieure de la zone de séparation 4 via une canalisation 5 prévue à cet effet. Les particules séparées de l'effluent sont quant à elles évacuées en partie supérieure du réacteur via une goulotte 6 prévue à cet effet.

Afin d'injecter l'eau pressurisée contenant un gaz dissous dans l'effluent à traiter, des buses d'injection sont mises en œuvre. Elles sont réparties de manière uniforme dans la partie inférieure de la zone de flottation du réacteur de flottation.

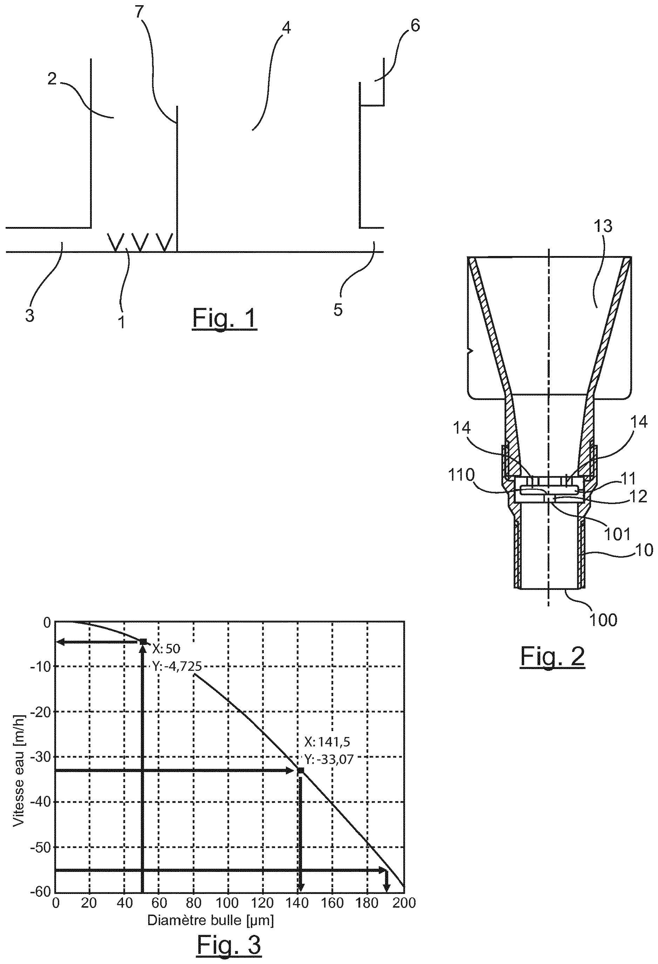

Ainsi que cela est représenté à la figure 2, qui illustre une buse d'injection développée par la Demanderesse, une telle buse d'injection comprend :
- une chambre d'arrivée 10 cylindrique pour l'eau pressurisée comprenant une entrée 100 et une sortie 101 ;
- une chambre de détente 11 cylindrique comprenant une entrée 110 communiquant avec la chambre d'arrivée 10 par un orifice 12 ;
- une chambre de diffusion 13 dont la section comprend un ou plusieurs troncs de cône de révolution s'étendant dans le prolongement les uns des autres et s'élargissant depuis la chambre de détente vers la sortie de la buse et communiquant avec la chambre de détente 11 au moyen de lumières 14 réparties de manière uniforme autour de l'axe de révolution de la buse.

Les industriels du traitement des effluents liquides n'ont de cesse que d'augmenter la productivité de leurs installations de traitement. Pour cela, ils souhaitent augmenter la vitesse de passage des effluents à traiter au sein des installations de traitement pour atteindre des valeurs de vitesse du front d'effluent supérieures à 30 à 40 m/h dans la zone de séparation du réacteur de flottation. Plus précisément, la vitesse du front de l'effluent est la vitesse de l'effluent dans la zone située au dessus de la paroi verticale 7 qui sépare la zone de flottation 2 de la zone de séparation 4.

La vitesse de passage maximale admissible d'un effluent à traiter dans un réacteur de flottation dépend de la capacité de flottaison des particules en suspension à séparer et des microbulles qui s'attacheront dessus, c'est-à-dire des agglomérats.

Afin de favoriser l'accrochage des microbulles de gaz aux particules en suspension, l'homme du métier recherche traditionnellement à produire des microbulles les plus petites possibles, c'est-à-dire ayant un diamètre équivalent inférieur à 100 micromètres.

Cette approche tend toutefois à réduire la flottabilité des agglomérats à cause d'un nombre maximal de microbulles attachables par floc et par conséquent à réduire la vitesse du traitement. Ceci est incompatible avec la volonté des industriels d'augmenter la vitesse de traitement.

A l'opposée, l'utilisation de grosses microbulles, dont le diamètre équivalent est supérieur à 200 micromètres, permet d'augmenter la flottabilité des agglomérats ce qui pourrait permettre d'augmenter la vitesse de traitement. Elle induit toutefois un risque de rupture des flocs de matière à éliminer ainsi qu'une consommation importante.

La loi de Stokes a permis de faire le lien entre la vitesse de traitement de l'effluent au sein d'un réacteur de flottation et la taille des microbulles, comme cela est illustré par la courbe de la figure 3. Comme cela apparaît sur cette courbe, le diamètre optimal des microbulles pour garantir une flottation efficace, sans risque d'entraînement de microbulles avec l'effluent traité ni de rupture de flocs, pour une vitesse de passage de l'effluent à traiter dans le réacteur autour de 30 m/h se situe aux environs de 140 micromètres. Comme cela apparaît également sur cette courbe, le diamètre optimal des microbulles pour garantir une flottation efficace sans risque d'entraînement de microbulles avec l'effluent traité ni de rupture de flocs, pour une vitesse de passage de l'effluent à traiter dans le réacteur autour de 50 m/h se situe aux environs de 190 micromètres.

Ainsi, pour assurer une flottation efficace et rapide, la taille des microbulles devraient se situer entre 100 et 200 micromètres.

Il n'existe toutefois pas de buse d'injection permettant de maximiser la production de microbulles ni trop petites ni trop grosses, c'est-à-dire permettant d'augmenter la proportion de microbulles produites dont le diamètre est compris entre 100 et 200 micromètres, ce qui permettrait en conséquence de réaliser une flottation rapide et efficace.

Le document DE3733583A1 divulgue une buse pour produire de fines bulles d'air par détente d'un fluide pressurisé.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique qui permette d'optimiser le traitement par flottation.

Notamment, l'invention a pour objectif, selon au moins un mode de réalisation, de fournir une telle technique qui permette d'augmenter la vitesse d'un traitement par flottation tout en évitant l'entraînement de microbulles de gaz dans l'effluent traité.

Un autre objectif de l'invention est, selon au moins un mode de réalisation, de fournir une telle technique qui permette de favoriser la production de microbulles dont le diamètre est compris entre 100 et 200 micromètres.

Un autre objectif de l'invention est de fournir, dans au moins un mode de réalisation, une telle technique qui soit simple et/ou efficace et/ou fiable et/ou économique.

### 4. Présentation de l'invention

Pour ceci, l'invention propose une buse d'injection d'eau pressurisée contenant un gaz dissous selon la revendication 1, ladite buse comprenant :
- une chambre d'arrivée cylindrique pour ladite eau ;
- une chambre de détente cylindrique comprenant une entrée communiquant avec ladite chambre d'arrivée par un orifice et une sortie ;
- une chambre de diffusion de section tronconique communiquant avec la sortie de ladite chambre de détente et s'élargissant depuis ladite chambre de détente ;
ladite buse comprenant des moyens de mise en rotation du flux d'eau s'écoulant en sortie de ladite chambre de détente.

Le flux sortant de la chambre de détente est ainsi mis en rotation autour de l'axe de la chambre de détente, c'est-à-dire autour de l'axe de la buse. Ceci permet de dissiper son énergie, et améliore l'accroche ultérieure des microbulles avec les flocs en évitant une injection d'eau blanche trop turbulente au sein du flux à traiter, et donc une brisure des flocs. Ceci permet également de rediriger et de disperser le flux au sein de la ou des chambres de diffusion pour un meilleur contact avec la paroi de diffusion et une continuation de la dissipation d'énergie.

On favorise ainsi la formation de microbulles dont le diamètre est compris entre 100 et 200 micromètres.

Dans un mode de réalisation particulier, ladite sortie de ladite chambre de détente comprend au moins deux lumières réparties de manière uniforme autour de l'axe de révolution de ladite chambre de détente, chacune desdites lumières s'étendant selon un axe :
- situé dans un plan parallèle à l'axe de révolution de ladite chambre de détente, et
- incliné par rapport à l'axe de révolution de ladite chambre de détente, les axes desdites lumières étant inclinés dans un même sens de manière à mettre en rotation, selon ledit sens, le flux d'eau s'écoulant en sortie de ladite chambre de détente.

Cette mise en œuvre concoure à maximiser de manière simple et efficace la formation de microbulles dont le diamètre est compris entre 100 et 200 micromètres.

Selon un mode de réalisation particulier, l'angle γ de ladite chambre de diffusion tronconique par rapport à son axe de révolution et l'angle α d'inclinaison desdites lumières sont choisis pour maintenir une taille de bulle essentiellement comprise entre 100 et 200 micromètres en sortie de ladite chambre de diffusion.

Le choix de ces valeurs d'angles concoure également à maximiser de manière simple et efficace la formation de microbulles dont le diamètre est compris entre 100 et 200 micromètres.

Selon une caractéristique particulière de l'invention, ladite buse comprenant un aiguillon placé dans ladite chambre de détente en regard dudit orifice et pointant en direction de celui-ci.

Ainsi, selon cet aspect, l'invention consiste à placer un aiguillon dans l'axe et orientée vers l'orifice reliant la chambre d'arrivée et la chambre de détente d'une buse d'injection d'eau pressurisée contenant un gaz dissous.

La présence de l'aiguillon permet :
- de répartir de manière homogène l'eau pressurisée à l'intérieur de la chambre de détente ;
- d'augmenter la surface de nucléation et ainsi d'améliorer l'homogénéité de la taille des microbulles ;

La buse selon l'invention comprend des moyens d'entretien de la mise en rotation dudit flux, lesdits moyens d'entretien étant logés dans ladite chambre de diffusion.

Ceci permet au flux s'écoulant dans la buse de conserver son mouvement rotatif. Ceci améliore l'accroche ultérieure des microbulles avec les flocs tout en continuant à dissiper l'énergie du flux injecté ; le flux est stabilisé en limitant les turbulences.

Lesdits moyens d'entretien comprennent au moins deux ailettes s'étendant depuis l'axe de révolution de ladite chambre de diffusion jusqu'à son contour périphérique et étant réparties de manière uniforme autour de cet axe, chacune desdites ailettes s'étendant dans un plan passant par un axe perpendiculaire à l'axe de révolution de ladite chambre de diffusion et inclinée dans ledit sens..

Selon une caractéristique particulière de l'invention, une buse peut comprendre au moins une chambre de diffusion intermédiaire tronconique placée entre ladite chambre de détente et ladite chambre de diffusion et dont la section s'élargit en direction de la chambre de diffusion.

La mise en œuvre d'une chambre de diffusion intermédiaire permet d'éviter les tourbillons azimutaux encore appelés recirculations.

Un cône avec une ouverture trop importante risque de ne pas contenir le flux et d'induire une recirculation au niveau des parois car un fluide injecté avec un différentiel de vitesse important dans un milieu au repos (en comparaison avec le fluide injecté) va se mettre dans un mouvement tourbillonnaire. Cette chambre de diffusion intermédiaire permet donc de guider le fluide et d'éviter ces « recirculations » tourbillonnaires très présentes en cas d'injection dite annulaire (ce qui est le cas ici puisque le flux est réparti autour d'un axe via les lumières).

Selon une caractéristique particulière de l'invention, une buse peut comprendre des entrées d'eau latérales situées entre ladite chambre de diffusion et ladite chambre de diffusion intermédiaire.

L'effluent à traiter contient des particules en suspension qui constituent à l'intérieur de la buse des sites de nucléation qui sont le siège de la formation de microbulles. On augmente ainsi la formation de microbulles d'air.

Dans ce cas, le diamètre d'entrée de ladite chambre de diffusion pourra être supérieur au diamètre de sortie de ladite chambre de diffusion intermédiaire, l'entrée de ladite chambre de diffusion chevauchant la sortie de ladite chambre de diffusion intermédiaire pour ménager entre elles des espaces constituant lesdites entrées d'eau latérales.

Selon une caractéristique particulière de l'invention, l'angle γ de ladite chambre de diffusion tronconique par rapport à son axe de révolution et l'angle β de ladite chambre de diffusion intermédiaire par rapport à son axe de révolution sont identiques.

Selon une caractéristique particulière de l'invention, l'angle γ de ladite chambre de diffusion tronconique par rapport à son axe de révolution est supérieur à l'angle β de ladite chambre de diffusion intermédiaire par rapport à son axe de révolution.

Selon une caractéristique particulière de l'invention, la valeur des angles γ et β est comprise entre 0 et 30° et est différente de 0.

Selon une caractéristique particulière de l'invention, l'angle α d'inclinaison desdites lumières est compris entre 20 et 60°.

Selon une caractéristique particulière de l'invention, l'angle ϕ d'inclinaison desdites ailettes est compris entre 20 et 60°.

### 5. Liste des figures

D'autres caractéristiques et avantages de l'invention apparaîtront à la lecture de la description suivante de modes de réalisation particuliers, donnés à titre de simples exemples illustratifs et non limitatifs, et des dessins annexés parmi lesquels :
- la figure 1 illustre le schéma d'un réacteur de flottation ;
- la figure 2 illustre une vue en coupe longitudinale d'une buse d'injection selon l'art antérieur;
- la figure 3 illustre le lien entre le diamètre des microbulles et la vitesse de passage d'un effluent à traiter dans un réacteur de flottation selon la loi de Stokes;
- la figure 4 illustre une vue en perspective d'une buse selon un premier mode de réalisation de l'invention ;
- la figure 5 illustre une vue en coupe longitudinale de la buse illustrée à la figure 4 ;
- les figures 6 et 7 illustrent deux détails de la figure 5 ;
- la figure 8 illustre une vue de dessus de la buse des figures 4 et 5 ;
- la figure 9 illustre une vue en coupe longitudinale d'une buse selon un deuxième mode de réalisation de l'invention ;
- la figure 10 illustre une vue en coupe transversale de la buse de la figure 9 selon un plan passant par les entrées d'eau latérales ;
- la figure 11 illustre des courbes montrant la taille des microbulles formées par la mise en œuvre d'une buse selon l'art antérieur et d'une buse selon l'invention.

### 6. Description de modes de réalisation particuliers

### 6.1. Architecture

Le bas, la base ou l'entrée de la buse désigne l'extrémité par laquelle l'eau pressurisée entre dans la buse. Le haut ou la sortie de la buse désigne l'extrémité par laquelle l'eau pressurisée détendue sort de la buse.

### 6.1.1. Premier type

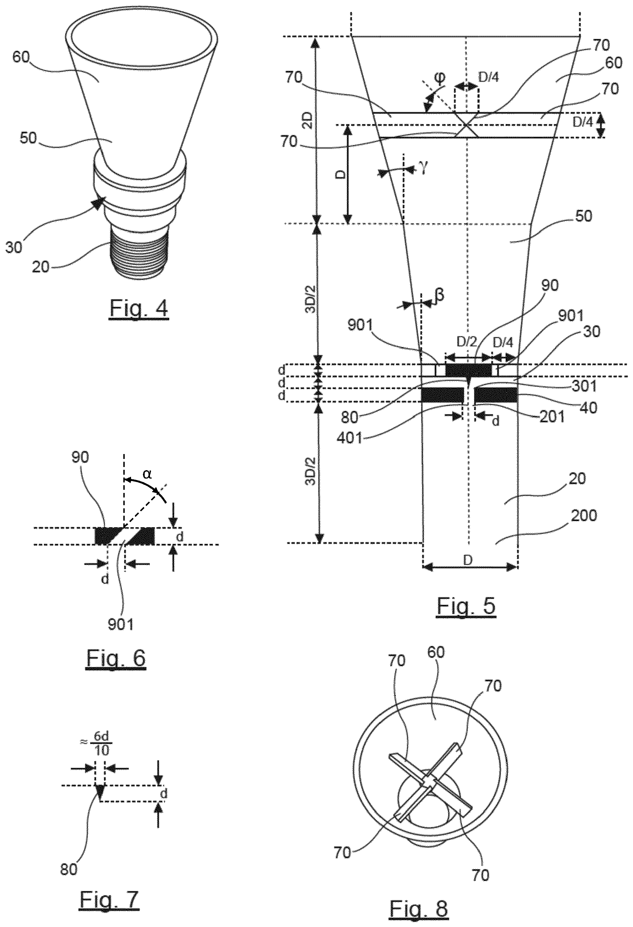

On présente, en relation avec les figures 4 à 8, un premier mode de réalisation d'une buse d'injection selon l'invention.

Ainsi que cela est représenté sur ces figures, une telle buse comprend une chambre d'arrivée 20 via laquelle de l'eau pressurisée contenant un gaz dissous peut-être introduite dans la buse. Cette chambre d'arrivée 20 comprend une entrée 200 et une sortie 201. Elle présente une section cylindrique de révolution. Dans ce mode de réalisation, la hauteur de la chambre d'arrivée 20 est égale à 3/2 fois son diamètre D.

Le diamètre D est préférentiellement compris entre 10 et 50mm.

Le diamètre d de l'orifice 401 est préférentiellement compris entre 2 et 6 mm.

La buse comprend également une chambre de détente 30.

La chambre de détente 30 s'étend dans le plongement de la chambre d'arrivée 20 et dans le même axe. Elle présente une section cylindrique de révolution. Elle est séparée de la chambre d'arrivée 20 par une paroi 40. Elle comprend une entrée 301 qui communique avec la sortie 201 de la chambre d'arrivée 20 au moyen d'un orifice 401 ménagé à travers la paroi 40 selon l'axe longitudinal de la chambre de détente 30. Dans ce mode de réalisation, l'épaisseur de la paroi 40 est égale au diamètre d de l'orifice 401, l'épaisseur de la chambre de détente 30 est égale au diamètre d de l'orifice 401, le diamètre de la chambre de détente 30 est égal à celui de la chambre d'arrivée 20.

La buse comprend une chambre de diffusion intermédiaire 50 qui s'étend dans le prolongement et dans l'axe de la chambre de détente 30. Dans une variante, plusieurs chambres de diffusion intermédiaires pourraient être mises en œuvre les unes dans le prolongement des autres. Elle présente la forme d'un tronc de cône. Celle-ci est séparée de la chambre de détente 30 par une paroi 90 traversée par des lumières 901 qui constituent la sortie de la chambre de détente 30 et l'entrée de la chambre intermédiaire de diffusion 50. La chambre de détente 30 et la chambre de diffusion intermédiaire 50 communiquent ainsi entre elles au moyen des lumières 901. Dans ce mode de réalisation, l'épaisseur de la paroi 90 est égale au diamètre d de l'orifice 401, la distance entre l'axe de révolution de la chambre de diffusion intermédiaire 50 et l'extrémité de chaque lumière 901 placée vers celui-ci est égale au quart du diamètre D de la chambre d'arrivée 20. Dans ce mode de réalisation également, les lumières 901 présentent une section carrée dont le côté est égal au diamètre d de l'orifice 401. Chaque lumière 901 s'étend selon un axe :
- situé dans un plan parallèle à l'axe de révolution de la chambre de détente, et
- incliné par rapport à l'axe de révolution de la chambre de détente.

Les axes des lumières 901 sont inclinés dans un même sens de manière à mettre en rotation, selon ce sens, le flux d'eau s'écoulant en sortie de la chambre de détente comme cela sera expliqué plus en détail par la suite.

Dans ce mode de réalisation, la valeur de l'angle α d'inclinaison des lumières 901 par rapport à l'axe de révolution de la chambre de détente est égale à 45°. Les lumières 901 sont ici au nombre de quatre. Elles sont réparties de manière uniforme autour de l'axe de révolution de la chambre de détente 30.

Le diamètre de la base de la chambre de diffusion intermédiaire 50 est égal à celui de la chambre de détente 30. Dans ce mode de réalisation, l'angle β de ce tronc de cône par rapport à son axe de révolution est égal à 7°. Ce tronc de cône s'élargi depuis la chambre de détente 30 vers la sortie de la chambre de diffusion intermédiaire 50. Dans ce mode de réalisation, la hauteur de la chambre de diffusion intermédiaire 50 est égale à 3/2 fois le diamètre D de la chambre d'arrivée 20.

La chambre de détente 30 loge un aiguillon 80. Celui-ci forme saillie à la surface de la paroi 90 et pointe en regard et vers l'orifice 401. L'aiguillon 80 est donc un élément pointu formant saillie à la surface de la paroi 90 et pointant dans l'axe et en direction de l'orifice 401. La hauteur de l'aiguillon 80 est égale à la hauteur de la chambre de détente. Le diamètre de la base de l'aiguillon est environ égal à 6/10 du diamètre de l'orifice 401.

La buse comprend une chambre de diffusion 60 qui s'étend dans le prolongement de la chambre de diffusion intermédiaire 50 et dans le même axe. Elle présente la forme d'un tronc de cône de révolution dont l'angle γ par rapport à son axe de révolution est dans ce mode de réalisation égal à 15°. Ce tronc de cône s'élargit depuis la chambre de diffusion intermédiaire 50 vers la sortie de la chambre de diffusion 60. Le diamètre de sa base est égal à celui du diamètre final de la chambre de diffusion intermédiaire 50. Dans ce mode de réalisation, la hauteur de la chambre de diffusion 60 est égale à 2 fois le diamètre D de la chambre d'arrivée 20.

La chambre de diffusion 60 loge des ailettes 70 encore appelées pales. Ces ailettes 70 sont réparties de manière uniforme autour de l'axe de révolution de la chambre de diffusion 60. Elles s'étendent chacune depuis cet axe jusqu'à la paroi périphérique de la chambre de diffusion 60. Dans ce mode de réalisation, elles sont au nombre de quatre. Chaque ailette 70 s'étend selon un plan passant par un axe perpendiculaire à l'axe de révolution de la chambre de diffusion 60 et incliné dans le sens de rotation du flux d'eau en sortie de la chambre de détente. L'angle ϕ d'inclinaison des ailettes 70 est dans ce mode de réalisation égal à 45° par rapport à l'horizontal ou un plan perpendiculaire à l'axe de la buse.

Dans ce mode de réalisation :
- la largeur projetée horizontalement des ailettes 70 est égale au quart du diamètre D la chambre d'arrivée 20 ;
- la hauteur projetée verticalement des ailettes 70 est égale au quart du diamètre D de la chambre d'arrivée 20
- la hauteur de leur axe longitudinal par rapport à la base de la chambre de diffusion 60 est égale au diamètre de la chambre d'arrivée 20.

Dans ce mode de réalisation, le diamètre D de la chambre d'arrivée 20 est égal à 27 mm et le diamètre d de l'orifice 401 est égal à 3,5 mm.

Les plages de fonctionnement de ladite buse sont préférentiellement de 3 à 10 bar de pression et de 0,3 à 3m³/h de débit.

### 6.1.2. Deuxième type

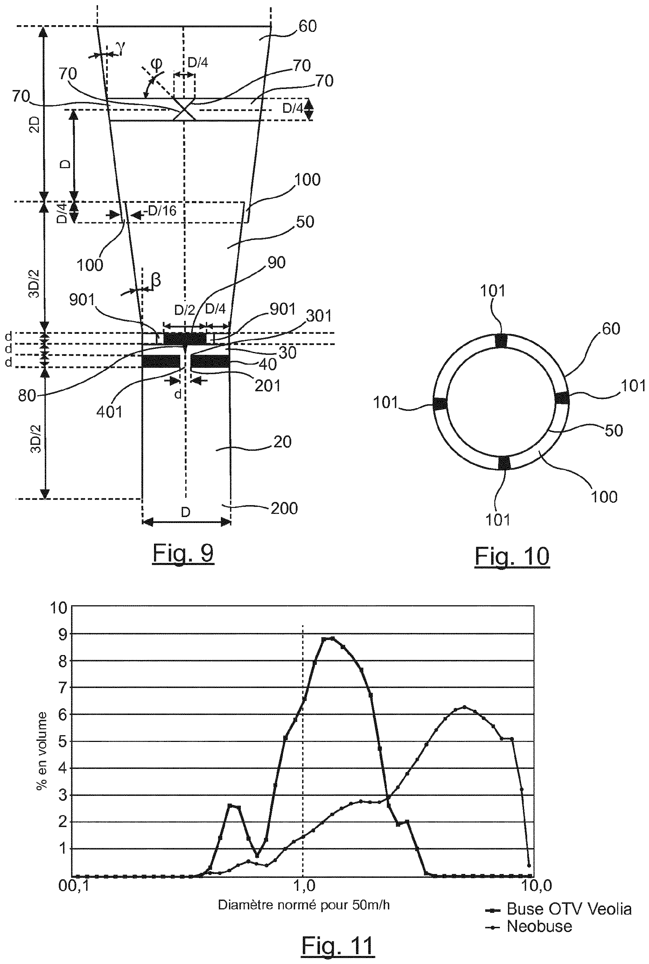

On présente en relation avec les figures 9 et 10 un deuxième mode de réalisation d'une buse selon l'invention. Seules les différences entre la buse selon le premier mode de réalisation et la buse selon ce deuxième mode de réalisation sont ici détaillées.

Selon ce mode de réalisation, la buse comprend des entrées d'eau latérales 100 situées entre la chambre de diffusion 60 et la chambre de diffusion intermédiaire 50.

Pour cela, le diamètre d'entrée de la chambre de diffusion 60 est supérieur au diamètre de sortie de la chambre de diffusion intermédiaire 50 et la base de la chambre de diffusion 60 chevauche la sortie de la chambre de diffusion intermédiaire 50 pour ménager entre elles des espaces constituant les entrées d'eau latérales 100. Un espace est ainsi ménagé entre les chambres de diffusion 60 et de diffusion intermédiaires 50 pour constituer les entrées d'eau latérales 100. Des supports 101 sont interposés entre les chambres de diffusion 60 et de diffusion intermédiaire 50 pour les relier entre elles à intervalles réguliers.

La hauteur de chevauchement des chambres de diffusion 60 et de diffusion intermédiaire 50 est dans ce mode de réalisation égale au quart du diamètre D de la chambre d'arrivée 20, alors que la distance séparant les parois des chambres de diffusion 60 et de diffusion intermédiaire 50 dans la zone de chevauchement est égale au seizième du diamètre D de la chambre d'arrivée 20.

Dans ce mode de réalisation, les angles des troncs de cône des chambres de diffusion 60 et de diffusion intermédiaire 50 sont identiques et égaux à 7°

### 6.2. Fonctionnement

### 6.2.1. Buse du premier type

Des buses selon l'invention sont destinées à être disposées à la base d'un réacteur de flottation dans le but de réaliser le traitement d'un effluent liquide par flottation.

Au cours d'un tel traitement, de l'eau pressurisée contenant un gaz dissous comme de l'air est introduit dans chaque buse par la chambre d'arrivée 20.

L'eau pressurisée passe ensuite à travers l'orifice 401 et pénètre la chambre de détente 30 à l'intérieur de laquelle elle subit une forte perte de charge et se détend engendrant la formation de microbulles d'air. La présence de l'aiguillon 80 permet :
- de répartir de manière homogène l'eau pressurisée à l'intérieur de la chambre de détente ;
- d'augmenter la surface de nucléation et ainsi d'améliorer l'homogénéité de la taille des microbulles ;

L'eau poursuit son déplacement à l'intérieur de la buse en passant à travers les lumières 901 pour pénétrer à l'intérieur de la chambre de diffusion intermédiaire 50.

Du fait de l'inclinaison des lumières 901 qui forment des chéneaux biseautés, le flux sortant de la chambre de détente est mis en rotation. Ceci permet de dissiper son énergie, et améliore l'accroche ultérieure des microbulles avec les flocs. Ceci permet également de rediriger et de disperser le flux au sein des chambres de diffusion et diffusion intermédiaire.

Le flux continue de se déplacer dans la buse en circulant à travers la chambre de diffusion intermédiaire 50 dont la mise en œuvre permet d'éviter les tourbillons azimutaux en recollant le flux à la paroi.

Le flux passe ensuite dans la chambre de diffusion 60 dont la mise en œuvre permet de ralentir le flux en dissipant son énergie, tout en offrant un contact avec la paroi de la buse. Dissiper l'énergie permet une meilleure accroche floc-bulle en sortie de buse et permet d'éviter de briser les flocs. Le flux s'écoule le long des ailettes 70 dont la mise en œuvre lui permet de conserver son mouvement rotatif. Ceci améliore encore l'accroche ultérieure des microbulles avec les flocs.

Un mélange d'eau et de microbulles, encore appelé eau blanche, sort alors de la buse par l'extrémité de la chambre de diffusion 60.

La mise en œuvre des lumières inclinées permet la production de microbulles de tailles dont le diamètre est compris entre 100 et 200 micromètres. Il faut que les lumières soient inclinées de telles sortes que les particules en suspension rencontrent forcément la surface supérieure de leur contour. L'angle d'inclinaison idéal est donc inférieur à 45° mais peut être compris entre 20 et 60°. La rotation induite par les lumières inclinées permet aussi de faire rencontrer les microbulles/particules moins violemment que dans un flux turbulent et ainsi de créer des microbulles plus grosses.

L'aiguillon n'est pas indispensable mais permet d'homogénéiser la production de microbulles en multipliant les sites de nucléation.

On évite ainsi la formation de microbulles trop petites ou trop grosses qui ne permettent pas d'assurer une flottation rapide et efficace.

### 6.2.2. Buse du deuxième type

Le fonctionnement d'une buse selon le deuxième mode de réalisation est identique à celui selon le premier mode de réalisation hormis le fait que sous l'effet du déplacement de l'eau pressurisée à l'intérieur de la buse, l'effluent à traiter environnant dans lequel baigne la buse est aspiré par dépression à l'intérieur de la buse au niveau des entrées d'eau latérales 100.

L'effluent à traiter contient des particules en suspension qui constituent à l'intérieur de la buse des sites de nucléation qui sont le siège de la formation de microbulles.

On augmente ainsi la formation de microbulles d'air.

### 6.3. Résultats

Des essais comparatifs ont été réalisés d'une part avec des buses selon l'art antérieur et d'autre part avec des buses selon le premier mode de réalisation.

Au cours de ces essais, le diamètre de la chambre d'arrivée des buses était égal à 27 millimètres, le diamètre de l'orifice était égal à 3,5 millimètres et le diamètre de l'aiguillon 80 était égal à 2 mm. La pression de l'eau pressurisée à son entrée dans la chambre d'arrivée était égale à 5 bars et son débit égal à 0.74m³/h.

La courbe de la figure 11 illustrant les résultats obtenus permet de constater que les buses selon l'invention ont permis la production d'une majorité de microbulles de taille suffisamment importante pour permettre d'assurer de manière efficace une flottation avec une vitesse de passage de l'effluent à traiter dans le réacteur supérieure à 50 m/h. En effet, la majorité des microbulles formées par la buse selon l'invention ont une taille proche de la taille optimale pour une vitesse de 50 m/h calculée par la loi de Stokes ; les microbulles formées par les buses selon l'art antérieur possèdent une partie de la population en deçà de ce seuil et ne possèdent donc pas une flottabilité suffisante pour augmenter les vitesses de passage dans les ouvrages de flottation.

## Revendications

1. Buse d'injection d'eau pressurisée contenant un gaz dissous, ladite buse comprenant :
- une chambre d'arrivée (20) cylindrique pour ladite eau ;
- une chambre de détente (30) cylindrique comprenant une entrée (301) communiquant avec ladite chambre d'arrivée (20) par un orifice (401) et une sortie ;
- une chambre de diffusion (60) de section tronconique communiquant avec la sortie de ladite chambre de détente (30) et s'élargissant depuis ladite chambre de détente ;
ladite buse comprenant des moyens de mise en rotation du flux d'eau s'écoulant en sortie de ladite chambre de détente (30), ladite buse comprenant également des moyens d'entretien (70) de la mise en rotation dudit flux, lesdits moyens d'entretien étant logés dans ladite chambre de diffusion (60), lesdits moyens d'entretien comprenant au moins deux ailettes (70) s'étendant depuis l'axe de révolution de ladite chambre de diffusion (60) jusqu'à son contour périphérique et étant réparties de manière uniforme autour de cet axe, chacune desdites ailettes (70) s'étendant dans un plan passant par un axe perpendiculaire à l'axe de révolution de ladite chambre de diffusion (60) et chacune desdites ailettes (70) étant inclinée dans le sens de rotation dudit flux.

2. Buse selon la revendication 1, dans laquelle ladite sortie de ladite chambre de détente (30) comprend au moins deux lumières (901) traversant une paroi (90) séparant ladite chambre de détente (30) et ladite chambre de diffusion (60), lesdites aux moins deux lumières (901) étant réparties de manière uniforme autour de l'axe de révolution de ladite chambre de détente (30), chacune desdites lumières (901) s'étendant selon un axe :
- situé dans un plan parallèle à l'axe de révolution de ladite chambre de détente (30), et
- incliné par rapport à l'axe de révolution de ladite chambre de détente (30),
les axes desdites lumières étant inclinés dans un même sens de manière à mettre en rotation, selon ledit sens, le flux d'eau s'écoulant en sortie de ladite chambre de détente (30).

3. Buse selon la revendication 2, dans laquelle l'angle γ de ladite chambre de diffusion (60) tronconique par rapport à son axe de révolution et l'angle α d'inclinaison de l'axe desdites lumières (901) par rapport à l'axe de révolution de ladite chambre de détente sont choisis pour maintenir une taille de bulle essentiellement comprise entre 100 et 200 micromètres en sortie de ladite chambre de diffusion (60).

4. Buse selon la revendication 2 ou 3, comprenant un aiguillon (80) placé dans ladite chambre de détente (30) en regard dudit orifice (401) et pointant en direction de celui-ci.

5. Buse selon l'une quelconque des revendications 1 à 4, comprenant au moins une chambre de diffusion intermédiaire (50) tronconique placée entre ladite chambre de détente (30) et ladite chambre de diffusion (60) et dont la section s'élargit en direction de la chambre de diffusion (60).

6. Buse selon la revendication 5, comprenant des entrées d'eau latérales (100) situées entre ladite chambre de diffusion (60) et ladite chambre de diffusion intermédiaire (50).

7. Buse selon la revendication 6, dans laquelle le diamètre d'entrée de ladite chambre de diffusion (60) est supérieur au diamètre de sortie de ladite chambre de diffusion intermédiaire (50), l'entrée de ladite chambre de diffusion (60) chevauchant la sortie de ladite chambre de diffusion intermédiaire (50) pour ménager entre elles des espaces constituant lesdites entrées d'eau latérales (100).

8. Buse selon l'une quelconque des revendications 5 à 7, dans laquelle l'angle γ de ladite chambre de diffusion (60) tronconique par rapport à son axe de révolution et l'angle β de ladite chambre de diffusion intermédiaire (50) tronconique par rapport à son axe de révolution sont identiques.

9. Buse selon l'une quelconque des revendications 5 à 7, dans laquelle l'angle γ de ladite chambre de diffusion (60) tronconique par rapport à son axe de révolution est supérieur à l'angle β de ladite chambre de diffusion intermédiaire (50) tronconique par rapport à son axe de révolution.

10. Buse selon l'une quelconque des revendications 5 à 9, dans laquelle la valeur des angles γ de ladite chambre de diffusion (60) tronconique par rapport à son axe de révolution et β de ladite chambre de diffusion intermédiaire (50) tronconique par rapport à son axe de révolution est comprise entre 0 et 30° et est différente de 0.

11. Buse selon l'une quelconque des revendications 3 à 10, dans laquelle l'angle α d'inclinaison de l'axe desdits lumières (901) est compris entre 20 et 60°.

12. Buse selon l'une quelconque des revendications 1 à 11, dans laquelle l'angle ϕ d'inclinaison desdites ailettes (70) est compris entre 20 et 60°.

## Patentansprüche

1. Einspritzdüse für unter Druck stehendes Wasser, umfassend ein aufgelöstes Gas, wobei die Düse Folgendes umfasst:
- eine zylindrische Einströmkammer (20) für das Wasser;
- eine zylindrische Ausdehnungskammer (30), umfassend einen Einlass (301) in Kommunikation mit der Einströmkammer (20) über eine Öffnung (401) und einen Auslass;
- eine Diffusionskammer (60) von kegelstumpfförmigem Querschnitt in Kommunikation mit dem Auslass der Ausdehnungskammer (30) und sich von der Ausdehnungskammer aus verbreiternd;
wobei die Düse Mittel zum in-Rotation-Versetzen des am Auslass der Ausdehnungskammer (30) ablaufenden Wasserstroms umfasst, wobei die Düse gleichermaßen Aufrechterhaltungsmittel (70) für das in-Rotation-Versetzen des Stromes umfasst, wobei die Aufrechterhaltungsmittel in der Diffusionskammer (60) untergebracht sind, wobei die Aufrechterhaltungsmittel wenigstens zwei Rippen (70) umfassen, sich von der Umdrehungsachse der Diffusionskammer (60) aus bis zu ihrer peripheren Kontur erstreckend und auf gleichmäßige Weise um diese Achse herum verteilt, wobei sich jede der Rippen (70) auf einer Ebene erstreckt, eine senkrechte Achse zu der Umdrehungsachse der Diffusionskammer (60) durchlaufend, und wobei sich jede der Rippen (70) in Richtung der Rotation des Stroms geneigt.

2. Düse nach Anspruch 1, in welcher der Auslass der Ausdehnungskammer (30) wenigstens zwei Lichter (901) umfasst, eine Wand (90) durchdringend, die Ausdehnungskammer (30) und die Diffusionskammer (60) trennend, wobei die wenigstens zwei Lichter (901) auf gleichmäßige Weise um eine Umdrehungsachse der Ausdehnungskammer (30) aufgeteilt sind, wobei jedes der Lichter (901) sich gemäß einer Achse erstreckt:
- situiert in einer Ebene parallel zu der Umdrehungsachse der Ausdehnungskammer (30), und
- geneigt in Bezug auf die Umdrehungsachse der Ausdehnungskammer (30),
wobei die Achsen der Lichter in eine gleiche Richtung geneigt sind, solcherart, dass sie gemäß der Richtung den am Auslass der Ausdehnungskammer (30) ablaufenden Wasserstrom in Rotation versetzen.

3. Düse nach Anspruch 2, in welcher der Winkel γ der kegelstumpfförmigen Diffusionskammer (60) in Bezug auf ihre Umdrehungsachse und den Neigungswinkel α der Achse der Lichter (901) in Bezug auf die Umdrehungsachse der Ausdehnungskammer ausgewählt sind, um eine Blasengröße im Wesentlichen zwischen 100 und 200 Mikrometern am Auslass der Diffusionskammer (60) aufrechtzuerhalten.

4. Düse nach Anspruch 2 oder 3, umfassend einen Stachel (80), platziert in der Ausdehnungskammer (30) gegenüber der Öffnung (401) und in deren Richtung deutend.

5. Düse nach einem der Ansprüche 1 bis 4, umfassend wenigstens eine kegelstumpfförmige intermediäre Diffusionskammer (50), platziert zwischen der Ausdehnungskammer (30) und der Diffusionskammer (60) und deren Querschnitt sich in Richtung der Diffusionskammer (60) verbreitert.

6. Düse nach Anspruch 5, umfassend laterale Wassereinlasse (100), situiert zwischen der Diffusionskammer (60) und der intermediären Diffusionskammer (50).

7. Düse nach Anspruch 6, in welcher der Durchmesser des Einlasses der Diffusionskammer (60) größer ist als der Durchmesser des Auslasses der intermediären Diffusionskammer (50), wobei der Einlass der Diffusionskammer (60) den Auslass der intermediären Diffusionskammer (50) überlappt, um zwischen ihnen die Räume, die lateralen Wassereinlasse (100) konstituierend, zu schaffen.

8. Düse nach einem der Ansprüche 5 bis 7, in welcher der kegelstumpfförmige Winkel γ der Diffusionskammer (60) in Bezug auf ihre Umdrehungsachse und der Winkel β der intermediären kegelstumpfförmigen Diffusionskammer (50) in Bezug auf ihre Umdrehungsachse identisch sind.

9. Düse nach einem der Ansprüche 5 bis 7, in welcher der Winkel γ der kegelstumpfförmigen Diffusionskammer (60) in Bezug auf ihre Umdrehungsachse größer ist als der Winkel β der intermediären kegelstumpfförmigen Diffusionskammer (50) in Bezug auf ihre Umdrehungsachse.

10. Düse nach einem der Ansprüche 5 bis 9, in welcher der Wert der Winkel γ der kegelstumpfförmigen Diffusionskammer (60) in Bezug auf ihre Umdrehungsachse und β der intermediären kegelstumpfförmigen Diffusionskammer (50) in Bezug auf ihre Umdrehungsachse zwischen 0 und 30° liegt und nicht 0 beträgt.

11. Düse nach einem der Ansprüche 3 bis 10, in welcher der Neigungswinkel α der Achse der Lichter (901) zwischen 20 und 60° beträgt.

12. Düse nach einem der Ansprüche 1 bis 11, in welcher der Neigungswinkel ϕ der Rippen (70) zwischen 20 und 60° beträgt.

## Claims

1. Nozzle for injecting pressurized water containing a dissolved gas, said nozzle comprising:
- a cylindrical intake chamber (20) for said water;
- a cylindrical expansion chamber (30) comprising an inlet (301) communicating with said intake chamber (20) by an orifice (401) and an outlet;
- a diffusion chamber (60) of truncated conical section communicating with the outlet of said expansion chamber (30) and widening out from said expansion chamber
said nozzle comprising means for putting the stream of water that flows out of said expansion chamber (30) into rotation, said nozzle also comprising means (70) for sustaining the putting of said stream into rotation, said means for sustaining being housed in said diffusion chamber (60), said means for sustaining comprising at least two blades (70) extending from the axis of revolution of said diffusion chamber (60) up to its peripheral contour and being distributed uniformly about this axis, each of said blades (70) extending in a plane passing through an axis perpendicular to the axis of revolution of said diffusion chamber (60) and each of said blades (70) being tilted in the sense of rotation of said stream.

2. Nozzle according to claim 1, wherein said outlet of said expansion chamber (30) comprises at least two apertures (901) crossing a wall (90) separating said expansion chamber (30) and said diffusion chamber (60), said at least two apertures (901) being distributed uniformly about the axis of revolution of said expansion chamber (30), each of said apertures (901) extending along an axis:
- situated in a plane parallel to the axis of revolution of said expansion chamber (30), and
- tilted relative to the axis of revolution of said expansion chamber (30), the axes of said apertures being tilted in a same sense so as to put the stream of water flowing out of said expansion chamber (30) into rotation along said sense.

3. Nozzle according to claim 2, wherein the angle γ of said truncated conical diffusion chamber (60) relative to its axis of revolution and the angle α of tilt of the axis of said apertures (901) relative to the axis of revolution of said expansion chamber are chosen to maintain a bubble size essentially ranging from 100 to 200 micrometers at the exit from said diffusion chamber (60).

4. Nozzle according to claim 2 or 3, comprising a sharped-pin (80) placed in said expansion chamber (30) facing said orifice (401) and pointing in its direction.

5. Nozzle according to any one of the claims 1 to 4, comprising at least one truncated conical intermediate diffusion chamber (50) placed between said expansion chamber (30) and said diffusion chamber (60), and having a section that widens in the direction of the diffusion chamber (60).

6. Nozzle according to claim 5, comprising lateral water inlets (100) situated between said diffusion chamber (60) and said intermediate diffusion chamber (50).

7. Nozzle according to claim 6, wherein the inlet diameter of said diffusion chamber (60) is greater than the outlet diameter of said intermediate diffusion chamber (50), the inlet of said diffusion chamber (60) overlapping the outlet of said intermediate diffusion chamber (50) to create spaces between said chambers, said spaces constituting said lateral water inlets (100).

8. Nozzle according to any one of the claims 5 to 7, wherein the angle γ of said truncated conical diffusion chamber (60) relative to its axis of revolution and the angle β of said truncated intermediate diffusion chamber (50) relative to its axis of revolution are identical.

9. Nozzle according to any one of the claims 5 to 7, wherein the angle γ of said truncated conical diffusion chamber (60) relative to its axis of revolution is greater than the angle β of said truncated intermediate diffusion chamber (50) relative to its axis of revolution.

10. Nozzle according to any one of the claims 5 to 9 wherein the value of the angles γ of said truncated conical diffusion chamber (60) relative to its revolution axis and β of said truncated intermediate diffusion chamber (50) relative to its revolution axis ranges from 0 to 30° and is different from 0.

11. Nozzle according to any one of the claims 3 to10, wherein the angle α of tilt of the axis of said apertures (901) ranges from 20° to 60°.

12. Nozzle according to any one of the claims 1 to 11, wherein the angle ϕ of tilt of said blades (70) ranges from 20° to 60°.
